# EUROPEAN PATENT SPECIFICATION

(11) **EP 0 606 814 B1**
(45) Date of publication and mention of the grant of the patent: **21.07.1999**
(21) Application number: 93480230.7
(22) Date of filing: 15.12.1993
(51) Int. Cl.: H04M 11/00

(54) **Method and system for utilization of a telephone coupled to a data processing system to emulate a graphical input device**
Verfahren und System zum Verwenden eines mit einem Datenverarbeitungssystem verbundenen Telephons für die Emulation einer graphischen Eingabevorrichtung
Méthode et système pour l'utilisation d'un téléphone relié à un système de traitement de données pour l'émulation d'un dispositif d'entrée graphique

(30) Priority: 14.01.1993 US 4733
(43) Date of publication of application: 20.07.1994
(73) Proprietor: International Business Machines Corporation, Armonk, N.Y. 10504 (US)
(72) Inventor: Jackson, Brion K., FlowerMound, Texas 75028 (US); Williams, Marvin L., Lewisville, Texas 75067 (US)
(74) Representative: de Pena, Alain

(56) References cited:
- DE-A- 3 409 532
- US-A- 4 426 555
- PATENT ABSTRACTS OF JAPAN, unexamined applications, E field, vol. 10, no. 11, January 17, 1986 THE PATENT OFFICE JAPANESE GOVERNMENT page 87 E 374; & JP-A-60-174 553 (FUJITSU)

## Description

The present invention relates in general to a method and system for the utilization of a telephone to emulate a graphical input device within a data processing system and in particular to a method and system for the association of dual tone modulation frequencies with software commands utilized for permitting communication between a graphical input device and a data processing system. Still more particularly, the present invention relates to a method and system for the execution of software commands utilized for permitting communication between a graphical input device and a data processing system in response to a reception of dual tone modulation frequencies at the data processing system.

Modern state-of-the-art personal computers, such as the International Business Machines Corporation Personal System/2, are capable of communicating with multiple types of graphic input pointing devices, which may include a mouse, track balls, pointing sticks, and touch display screens. These devices permit a user to manipulate objects on a computer display screen in an intuitive graphical manner rather than by typing computer commands on a computer keyboard.

Other known pointing devices include a mouse with a built-in microphone so that the device may be utilized as a traditional mouse, a voice input into a computer, or as a traditional voice telephone. A three-axis touch sensitive pad is known for controlling a cursor. A user may touch areas within the pad to move a cursor within a computer.

Many existing systems provide audio feedback to a user regarding the location of a cursor which is especially useful for blind users. Other systems alter the intensity of audible beeps in response to variations of the location of the cursor within the display screen. In addition, audio messages may also be provided to the user to indicate a utilization of pull down menus.

Modern telephone instruments utilize so-called "dual tone modulation frequencies" (DTMF) to send information across a telephone network in response to selection of a keypad. Telephones which utilize dual tone modulation frequencies transmit two unique frequencies associated with each key on the keypad. For example, pressing key "5" will generate a 770 Hz tone and a 1336 Hz tone, while pressing key "2" will generate a 697 Hz tone and a 1336 Hz tone. Some known systems permit a user to select applications utilizing a DTMF telephone. For example, a user may access his bank account with a telephone.

Thus, while systems exist which permit the remote accessing of a data processing system and entry of data utilizing telephone instruments, modern data processing systems often rely upon graphic input devices for access and control. It should therefore be apparent that a method and system which permits a user to manipulate a data processing system graphic input device from a remote location would be highly desirable.

It is therefore one object of the present invention to provide a method and system for the utilization of a telephone to emulate a graphical input device within a data processing system.

It is another object of the present invention to provide a method and system for the association of dual tone modulation frequencies with software commands utilized for permitting communication between a graphical input device and a data processing system.

It is yet another object of the present invention to provide a method and system for the execution of software commands utilized for permitting communication between a graphical input device and a data processing system in response to a reception of dual tone modulation frequencies at the data processing system.

The foregoing objects are achieved as is now described. A method and system are provided for permitting a telephone coupled to a data processing system to be utilized to emulate a graphical input device. A telephone which is capable of generating dual tone modulation frequencies is coupled to a data processing system which includes at least one graphical input device. The graphical input device has an associated software routine which includes software commands for permitting communication between the graphical input device and the data processing system. Each set of dual tone modulation frequencies are associated with one of the software commands. Dual tone modulation frequencies may then be received at the data processing system via a telephone system connection. At least one software command is then executed in response to a reception of dual tone modulation frequencies at the data processing system, emulating the utilization of a graphic input device.

More particularly, the invention includes a system of graphical input in a data processing system comprising a processor, a display screen and a graphical data entry device having an associated software routine which includes software commands for permitting communication between the graphical input device and the data processing system, characterized in that :
said graphical data entry device is a telephone capable of generating a plurality of dual tone modulation frequencies and being coupled to said data processing system via a telephone network, and
said data processing system includes :
means for associating each of said plurality of dual tone modulation frequencies with one of said software commands,
means for receiving said dual tone modulation frequencies at said data processing system, and
means for executing at least one of said plurality of software commands in response to a reception of said plurality of dual tone modulation frequencies at said data processing system.

The above as well as additional objects, features, and advantages of the present invention will become apparent in the following detailed written description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 depicts a pictorial representation of a data processing system which may be utilized to implement the method and system of the present invention;
Figure 2 illustrates a pictorial representation of a display screen and a keypad of a telephone which may be utilized to implement the method and system of the present invention; and
Figures 3A and 3B together form a high level logic flow chart which depicts a process for the execution of software commands in response to a reception of associated dual tone modulation frequencies in accordance with the method and system of the present invention.

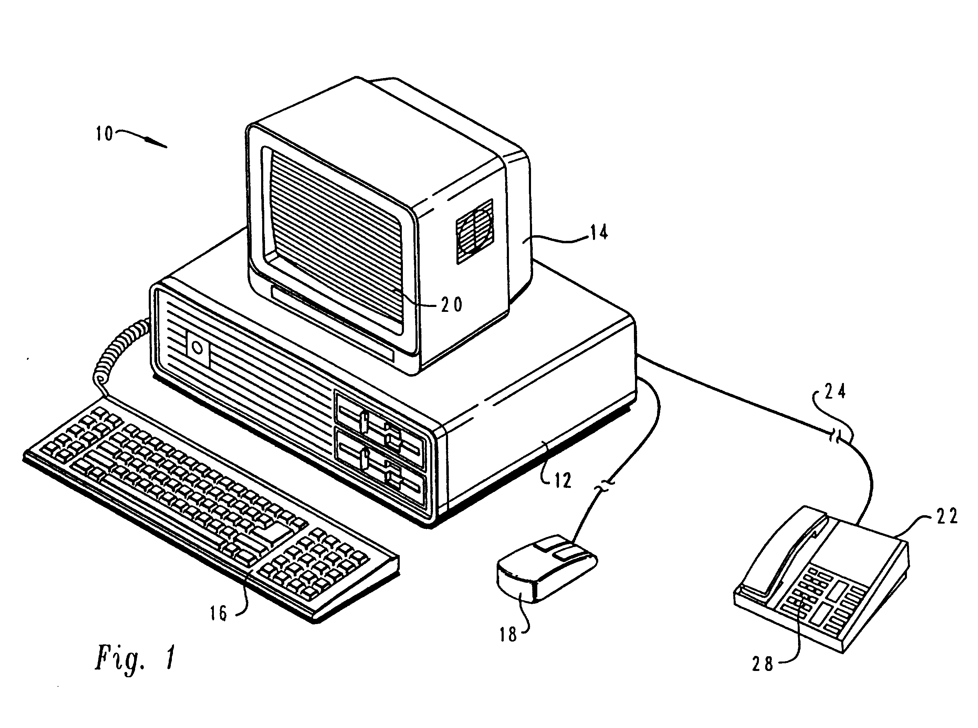

With reference now to the figures and in particular with reference to Figure 1, there is depicted a pictorial representation of a data processing system 10 which may be utilized in accordance with the method and system of the present invention. Data processing system 10 preferably includes a processor 12, preferably provided by utilizing an International Business Machines Personal System/2 or similar system. Data processing system 10 generally includes a video display device 14 including a display screen 20, keyboard 16, and a graphical data entry device such as a mouse 18. Video display device 14, keyboard 16, and mouse 18 may be utilized to allow user input to processor 12 and to provide user discernable messages. A telephone 22 having a keypad 28 is coupled to data processing system 10 via a telephone network 24 and is capable of generating dual tone modulation frequencies. In a preferred embodiment of the present invention, processor 12 is suitably programmed to provide execution of software commands in response to a reception by data processing system 10 of associated dual tone modulation frequencies.

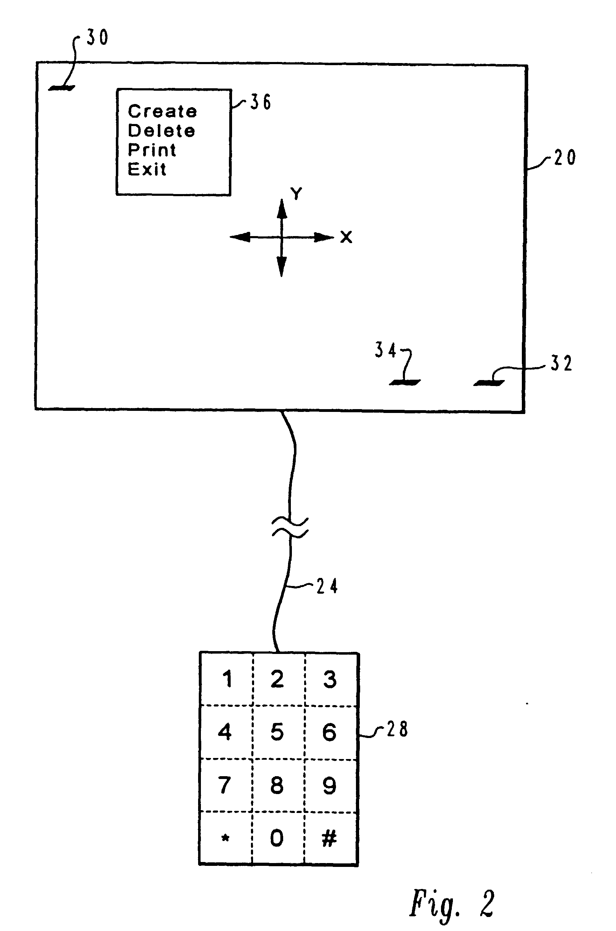

Referring to Figure 2, there is depicted a pictorial representation of display screen 20 and keypad 28 of telephone 22 which is capable of generating dual tone modulation frequencies which may be utilized to implement the method and system of the present invention. Keypad 28 may be utilized by a user to emulate a graphical input device such as mouse 18. A user may select keys of keypad 28 to perform functions within data processing system 10 such as move one space in the positive X axis within display screen 20, move to the lower right corner of display screen 20 as depicted at cursor location 32, move to the upper left corner of display screen 20 as depicted at cursor location 30 or select a pull down menu 36.

For example, a user may choose to assign key 4 of keypad 28 to perform movement of a cursor within display screen 20 one space in the negative X axis direction, key 6 of keypad 28 to move a cursor one space in the positive X axis direction, key 2 to move a cursor one space in the positive Y axis direction, and key 8 to move a cursor one space in the negative Y axis direction. Other keys may be utilized to move more than one space. For example, a user may define key 7 to move 3 spaces in the negative X axis direction. If a cursor is initially located in the lower right corner as depicted at cursor location 32, a user may move the cursor three spaces in the negative X axis direction to cursor location 34 by selecting key 7.

Further, a user may choose a series of keystrokes such as key 1, key 2 then key 3 to select a pull down menu 36. Once menu 36 has been selected, the user may have previously assigned key 1 for selecting the "Create" command, key 2 for selecting the "Delete" command, key 3 for selecting the "Print" command, and key 4 for selecting the "Exit" command.

Once a user has assigned a key or series of keystrokes for movement or selection of commands, a user may utilize telephone 22 to emulate a graphical input device by utilizing keypad 28 to move a cursor and select commands. A user may receive confirmation of movement or selection by receiving audible messages such as beeps or prerecorded verbal messages once the movement or selection has been completed.

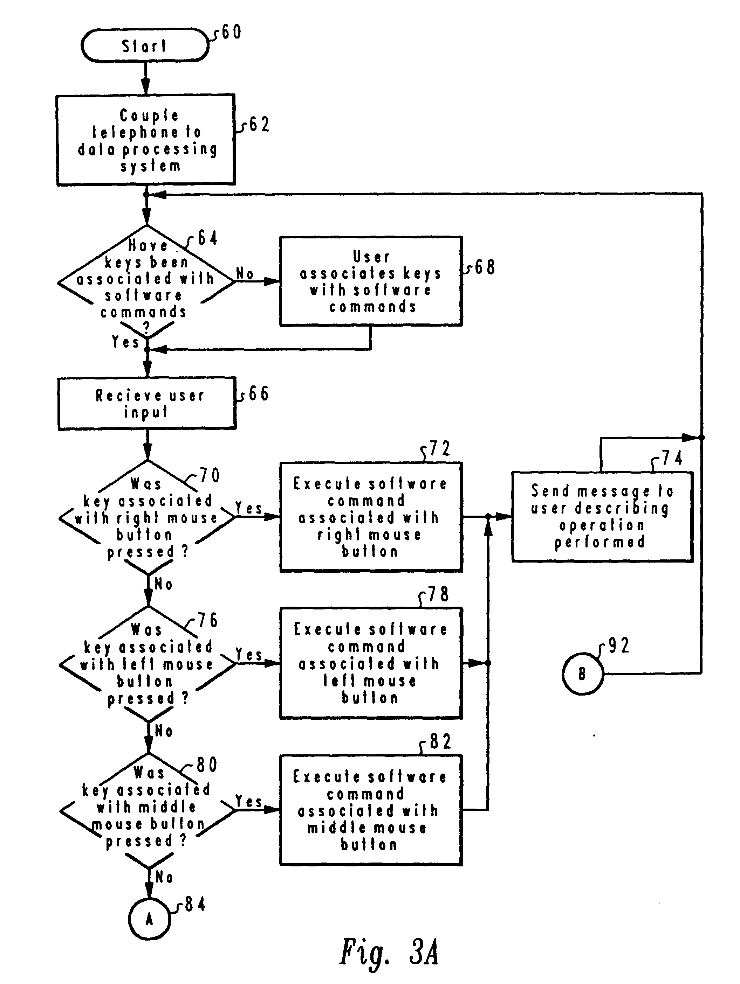

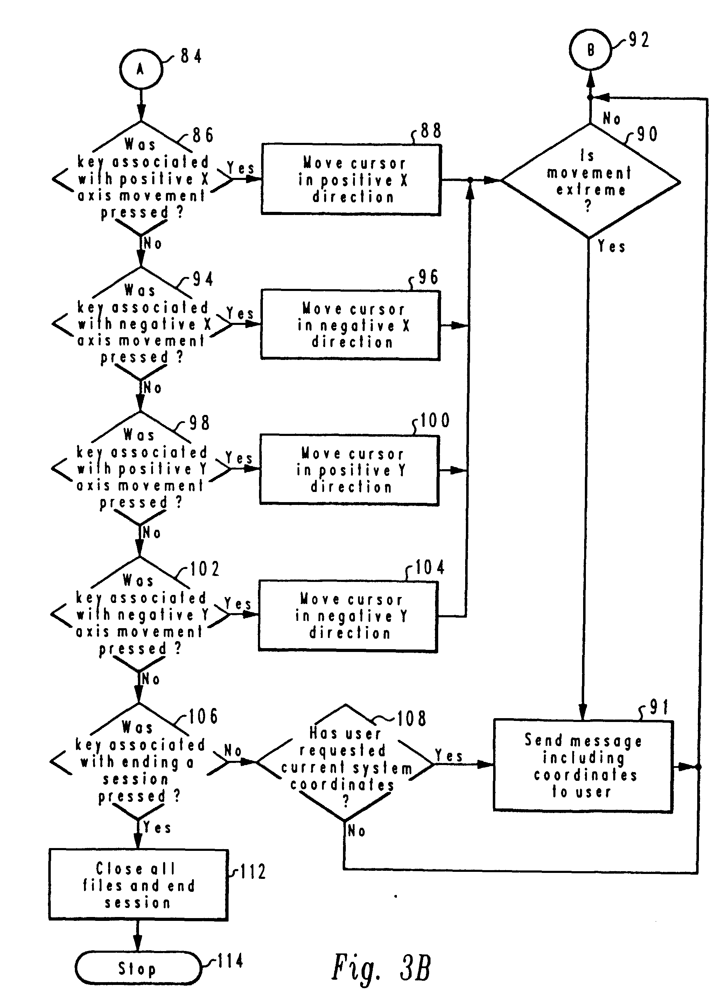

Referring now to Figures 3A and 3B, there is depicted a high level flow chart which illustrates the execution of software commands in response to a reception of associated dual tone modulation frequencies in accordance with the method and system of the present invention. The process starts as depicted at block 60 and thereafter passes to block 62 which depicts the coupling of a telephone to a data processing system via a telephone network. Next, the process passes to block 64 which illustrates a determination of whether or not keys within a keypad of a telephone have been associated with software commands. If a determination has been made that keys have been associated with software commands, the process passes to block 66 which illustrates the reception of a user input. Referring again to block 64, if a determination is made that keys have not been associated with software commands, the process passes to block 68 which illustrates the association by a user of keys with software commands. Thereafter, the process again passes to block 66.

Next the process passes to block 70 which illustrates a determination of whether or not a key associated with a right mouse button has been pressed. If a determination is made that a key associated with a right mouse button has been pressed, the process passes to block 72 which depicts the execution of the software command associated with the right mouse button. Next the process passes to block 74 which illustrates the sending of a message to the user describing the operation performed. Referring again to block 70, if a determination is made that a key associated with the right mouse button has not been pressed, the process passes to block 76 which depicts a determination of whether or not a key associated with the left mouse button has been pressed. If a determination is made that a key associated with the left mouse button has been pressed, the process passes to block 78 which illustrates the execution of the software command associated with the left mouse button. Thereafter, the process again passes to block 74.

Referring again to block 76, if a determination is made that a key associated with the left mouse button has not been pressed, the process passes to block 80 which illustrates a determination of whether or not a key associated with a middle mouse button has been pressed. Those skilled in the art will recognize that some systems may include a mouse which does not have a middle button or may include a mouse with multiple buttons. If a determination is made that a key associated with a middle mouse button has been pressed, the process passes to block 82 which illustrates the execution of the software command associated with the middle mouse button. Thereafter, the process passes to block 74.

Referring again to block 80, if a determination is made that a key associated with the middle mouse button has not been pressed, the process passes to block 86 as illustrated through connector 84. Block 86 depicts a determination of whether or not a key associated with positive X axis movement has been pressed. If a determination is made that a key associated with positive X axis movement has been pressed, the process passes to block 88 which illustrates the movement of a cursor in the positive X direction. Next, the process passes to block 90 which depicts a determination of whether or not the movement has been determined to be extreme. A user may specify certain movements to be extreme. For example, a user may specify that any cursor movement greater than five spaces is an extreme movement. If a determination is made that the movement is not extreme, the process passes back to block 64 as illustrated through connector 92. If a determination is made that the movement is extreme, the process passes to block 91 which depicts the sending of a message including the current system coordinates to a user. The process then passes to block 64 as illustrated through connector 92.

Referring again to block 86 if a determination is made that a key associated with positive X axis movement was not pressed, the process passes to block 94 which illustrates a determination of whether or not a key associated with negative X axis movement was pressed. If a determination is made that a key associated with negative X axis movement was pressed, the process passes to block 96 which depicts the movement of the cursor in the negative X direction. Thereafter, the process again passes to block 90.

Referring again to block 94, if a determination is made that a key associated with negative X axis movement was not pressed, the process then passes to block 98 which illustrates a determination of whether or not a key associated with positive Y axis movement was pressed. If a determination is made that a key associated with positive Y axis movement was pressed, the process passes to block 100 which illustrates the movement of the cursor in the positive Y direction. Thereafter, the process again passes to block 90.

Referring again to block 98, if a determination is made that a key associated with positive Y axis movement was not pressed, the process passes to block 102 which depicts a determination of whether or not a key associated with negative Y axis movement was pressed. If a determination is made that a key associated with negative Y axis movement was pressed, the process passes to block 104 which illustrates the movement of a cursor in the negative Y direction. Thereafter, the process again passes to block 90.

Referring again to block 102, if a determination is made that a key associated with negative Y axis movement was not pressed, the process passes to block 106 which depicts a determination of whether or not a key associated with the ending of a session was pressed. If a determination is made that a key associated with the ending of a session was not pressed, the process passes to block 108 which illustrates a determination of whether or not a user has requested the current system coordinates. A user may request coordinates in order to locate a cursor within display screen 20 (see Figure 1). If a determination is made that a user has requested the current system coordinates, the process passes to block 91 which illustrates the sending of a message including the system coordinates to the user.

Thereafter, the process again passes to block 64 as illustrated through connector 92. Referring again to block 108, if a user has not requested the current system coordinates, the process passes to block 64 as illustrated through connector 92. Referring again to block 106, if a key associated with ending a session has been pressed, the process passes to block 112 which illustrates the closing of all files and ending the current session. The process then terminates as illustrated at block 114.

## Claims

1. A system of graphical input in a data processing system (10) comprising a processor (12), a display screen (20) and a graphical data entry device (22) having an associated software routine which includes software commands for permitting communication between the graphical input device and the data processing system, characterized in that :
said graphical data entry device is a telephone capable of generating a plurality of dual tone modulation frequencies and being coupled to said data processing system via a telephone network (24), and
said data processing system includes :
means for associating each of said plurality of dual tone modulation frequencies with one of said software commands,
means for receiving said dual tone modulation frequencies at said data processing system, and
means for executing at least one of said plurality of software commands in response to a reception of said plurality of dual tone modulation frequencies at said data processing system.

2. The system according to claim 1, characterized it further includes means in said data processing system (10) for sending a confirmation to said telephone in response to said execution of at least one of said plurality of software commands.

3. A method in a data processing system for utilizing a telephone to emulate a graphical input device, said telephone capable of generating a plurality of dual tone modulation frequencies and being coupled to said data processing system via a telephone network, said data processing system including at least one graphical input device having an associated software routine including a plurality of software commands for permitting communication between said graphical input device and said data processing system, said method comprising the data processing implemented steps of:
associating each of said plurality of dual tone modulation frequencies with one of said plurality of software commands;
receiving said plurality of dual tone modulation frequencies at said data processing system; and
executing at least one of said plurality of software commands in response to a reception of said plurality of dual tone modulation frequencies at said data processing system.

4. The method according to claim 3, characterized in that it also includes the step of sending a confirmation to said telephone in response to said execution of at least one of said plurality of software commands.

## Patentansprüche

1. System zur grafischen Eingabe in ein Datenverarbeitungssystem (10), das einen Prozessor (12), einen Bildschirm (20) und eine grafische Dateneingabevorrichtung (22) mit einer zugeordneten Softwareroutine umfasst, die Softwarebefehle für die Ermöglichung der Kommunikation zwischen der grafischen Eingabevorrichtung und dem Datenverarbeitungssystem enthält, dadurch gekennzeichnet, dass:
die grafische Dateneingabevorrichtung ein Telefon ist, das eine Vielzahl von Zweitonmodulation-Frequenzen erzeugen kann und über ein Telefonnetz (24) mit dem Datenverarbeitungssystem verbunden ist, und
dass das Datenverarbeitungssystem folgendes enthält:
Mittel zum Verbinden jeder aus der Vielzahl von Zweitonmodulation-Frequenzen mit einem der Softwarebefehle,
Mittel zum Empfangen der Zweitonmodulation-Frequenzen im Datenverarbeitungssystem, und
Mittel zum Ausführen von mindestens einem aus der Vielzahl von Softwarebefehlen auf den Empfang der Vielzahl von Zweitonmodulation-Frequenzen im Datenverarbeitungssystem hin.

2. System nach Anspruch 1, dadurch gekennzeichnet, dass es im Datenverarbeitungssystem (10) außerdem Mittel zum Senden einer Bestätigung zum Telefon auf die Ausführung von mindestens einem aus der Vielzahl von Softwarebefehlen hin enthält.

3. Verfahren in einem Datenverarbeitungssystem zum Verwenden eines Telefons für die Emulation einer grafischen Eingabevorrichtung, wobei das Telefon eine Vielzahl von Zweitonmodulation-Frequenzen erzeugen kann und über ein Telefonnetz mit dem Datenverarbeitungssystem verbunden ist, wobei das Datenverarbeitungssystem mindestens eine grafische Eingabevorrichtung mit einer zugeordneten Softwareroutine enthält, die eine Vielzahl von Softwarebefehlen zur Ermöglichung der Kommunikation zwischen der grafischen Eingabevorrichtung und dem Datenverarbeitungssystem enthält, wobei das Verfahren die folgenden, von der Datenverarbeitung realisierten Schritte umfasst:
Verbinden von jeder aus der Vielzahl von Zweitonmodulation-Frequenzen mit einem aus der Vielzahl von Softwarebefehlen;
Empfangen der Vielzahl von Zweitonmodulation-Frequenzen im Datenverarbeitungssystem; und
Ausführen von mindestens einem aus der Vielzahl von Softwarebefehlen auf den Empfang der Vielzahl von Zweitonmodulation-Frequenzen, im Datenverarbeitungssystem hin.

4. Verfahren nach Anspruch 3, dadurch gekennzeichnet, dass es außerdem den Schritt des Sendens einer Bestätigung zum Telefon auf die Ausführung von mindestens einem aus der Vielzahl von Softwarebefehlen hin beinhaltet.

## Revendications

1. Un système d'entrée graphique dans un système de traitement de données (10) comprenant un processeur (12), un écran d'affichage (20) et un dispositif d'entrée de données graphique (22) ayant une routine logicielle associée comprenant des instructions logicielles destinées à permettre une communication entre le dispositif d'entrée graphique et le système de traitement de données, caractérisé en ce que :
ledit dispositif d'entrée de données graphique est un téléphone, capable de générer une pluralité de fréquences de modulation de tonalités duales et couplé audit système de traitement de données via un réseau téléphonique (24), et
ledit système de traitement de données comprend :
des moyens pour associer chacune parmi ladite pluralité de fréquences de modulation de tonalités duales à l'une desdites instructions logicielles,
des moyens pour recevoir lesdites fréquences de modulation de tonalité de dual audit système de traitement de données, et
des moyens pour exécuter au moins l'une de ladite pluralité d'instructions logicielles en réponse à la réception de ladite pluralité des fréquences de modulation de tonalités duales audit système de traitement de données.

2. Le système selon la revendication 1, caractérisé par le fait de comprendre en outre dans ledit système de traitement de données (10) des moyens pour envoyer une confirmation audit téléphone, en réponse à ladite exécution d'au moins une parmi ladite pluralité d'instructions logicielles.

3. Un procédé dans un système de traitement de données pour utiliser un téléphone afin d'émuler un dispositif d'entrée graphique, ledit téléphone étant capable de générer une pluralité de fréquences de modulation de tonalités duales et étant couplé audit système de traitement de données via un réseau téléphonique, ledit système de traitement de données comprenant au moins un dispositif d'entrée graphique ayant une routine logicielle associée comprenant une pluralité d'instructions logicielles pour permettre une communication entre ledit dispositif d'entrée graphique et ledit système de traitement de données, ledit procédé comprenant les étapes de mis en oeuvre du traitement de données consistant à :
associer chacune de ladite pluralité de fréquences de modulation de tonalités duales à l'une parmi ladite pluralité d'instructions logicielles;
recevoir ladite pluralité de fréquences de modulation de tonalités duales audit système de traitement de données;
exécuter au moins l'une de ladite pluralité d'instructions logicielles en réponse à la réception de ladite pluralité de fréquences de modulation de tonalités duales audit système de traitement de données.

4. Le procédé selon la revendication 3, caractérisé en ce qu'il comprend également l'étape d'émission d'une confirmation audit téléphone en réponse à ladite exécution d'au moins une parmi ladite pluralité d'instructions logicielles.
